(19) Europäisches Patentamt
European Patent Office
Office européen des brevets

(11) Veröffentlichungsnummer: **0 232 778**
**B1**

(12) # EUROPÄISCHE PATENTSCHRIFT

(45) Veröffentlichungstag der Patentschrift: **05.12.90**

(51) Int. Cl.⁵: **C08G 18/08**, C08G 18/28, C09J 175/04

(21) Anmeldenummer: **87100981.7**

(22) Anmeldetag: **24.01.87**

(54) **Verfahren zur kontinuierlichen Herstellung von wässrigen Polyurethandispersionen und ihre Verwendung als Beschichtungsmittel oder als Klebstoff.**

(30) Priorität: **08.02.86 DE 3603996**

(43) Veröffentlichungstag der Anmeldung: **19.08.87 Patentblatt 87/34**

(45) Bekanntmachung des Hinweises auf die Patenterteilung: **05.12.90 Patentblatt 90/49**

(84) Benannte Vertragsstaaten: **BE DE ES FR GB IT NL**

(56) Entgegenhaltungen:
**EP-A- 0 103 174**
**DE-A- 1 570 602**
**FR-A- 2 210 644**
**US-A- 3 870 684**

**Firmenschrift Fa Schott/Mainz, Verfahrenstechnische Reihe Nr. 6402d**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Henning, Wolfgang, Dr., Zur Linde 27, D-5067 Kürten(DE)**
Erfinder: **Meckel, Walter, Dr., Zonser Strasse 9, D-4040 Neuss(DE)**
Erfinder: **Fuhrmann, Peter,, Amandusstrasse 5, D-5000 Köln 71(DE)**

**EP 0 232 778 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein kontinuierliches Verfahren zur Herstellung von wäßrigen Polyurethandispersionen durch kontinuierliche Überführung von Lösungen von hydrophil modifizierten Polyurethanen oder von hydrophil modifizierten NCO-Prepolymeren in einem, gegebenenfalls wasserhaltigen, organischen Lösungsmittel in eine wäßrige Dispersion und kontinuierliches Abdestillieren des in der Dispersion vorliegenden Lösungsmittels und die Verwendung der so erhaltenen wäßrigen Dispersionen als Beschichtungsmittel für beliebige Substrate oder als Klebstoff.

Verfahren zur Herstellung von wäßrigen Polyurethandispersionen, wobei hierunter sowohl wäßrige Dispersionen bzw. Suspensionen von reinen Polyurethanen als auch von Polyurethanharnstoffen zu verstehen sind, sind bekannt und werden beispielsweise in folgenden Literaturstellen beschrieben: DE-PS 880 485, DE-AS 1 044 404, US-PS 3 036 998, DE-PS 1 178 586, DE-PS 1 184 946, DE-AS 1 237 306, DE-AS 1 495 745, DE-OS 1 595 602, DE-OS 1 770 068, DE-OS 2 019 324, DE-OS 2 035 732, DE-OS 2 446 440, DE-OS 2 345 256, DE-OS 2 427 274, US-PS 3 479 310 und Angewandete Chemie 82, 53 (1970) und Angew. Makromol. Chem. 26, 85 ff (1972).

Von den genannten Verfahren ist insbesondere das "Acetonverfahren" in Analogie zur Lehre der DE-OS 1 495 745 (= US-PS 3 479 310) bzw. zu der DE-OS 1 495 847 (GB-PS 1 067 788) von Bedeutung. Hierbei wird im allgemeinen zunächst ein NCO-Prepolymer hergestellt, welches anschließend in einem inerten Lösungsmittel gelöst wird, worauf sich die Kettenverlängerung in Lösung zum höhermolekularen Polyurethan anschließt. Der Einbau der für die Dispergierung erforderlichen hydrophilen Gruppen erfolgt vorzugsweise entweder durch Einbau von ionische, potentiell ionische oder nicht-ionisch hydrophile Gruppen tragenden Diolen ins Prepolymer oder durch Verwendung entsprechender Amine als Kettenverlängerungsmittel. Die Dispergierung erfolgt diskontinuierlich in Rührkesseln mit Rührer und evtl. Strombrechern. Das verwendete Lösungsmittel wird in der Regel unmittelbar nach der Dispergierung in Wasser aus dem Rührkessel abdestilliert.

Trotz der hervorragenden Eigenschaften der nach dieser Verfahrensweise gewonnenen Produkte hat das "Acetonverfahren" erhebliche Nachteile. Durch die notwendige Verwendung des Lösungsmittels, welches in der Regel dem Prepolymer vor der Kettenverlängerung und Dispergierung im Reaktionskessel zugesetzt wird und nach der Dispergierung aus dem Reaktionskessel abdestilliert wird, kann der zur Verfügung stehende Rauminhalt des Kessels nur unvollständig ausgenutzt werden. Dies wirkt sich ungünstig auf die Raum-Zeit-Ausbeute aus und erhöht die Herstellungskosten. Die oft lange Temperaturbelastung der Dispersion während der Destillation des Lösungsmittels kann zudem bei temperaturempfindlichen Dispersionen zu Problemen führen. Weiterhin wirken sich die meist langen Destillationszeiten oft auf den Zustand der dispergierten Teilchen, insbesondere deren Quellungsgrad, nachteilig aus. Darüber hinaus muß in der Regel das abdestillierte Lösungsmittel zur Wiederverwendung in einem nachfolgenden energieaufwendigen Detillationsschritt von Resten von Wasser befreit werden, da dieses als reaktiver Reaktionspartner zu unerwünschten Nebenreaktionen mit den NCO-Gruppen des Prepolymeren bei dessen Lösung führen kann.

Auch Verfahren zur Herstellung von wäßrigen Polyurethandispersionen durch kontinuierliche Dispergierung sind bekannt. In der DE-OS 2 260 870 wird beispielsweise die Verwendung von speziellen Mischreaktoren beschrieben, die auf der Grundlage sich ausbildender Zellarströmungen basieren. Derartige Reaktoren sind technisch aufwendige Konstruktionen in denen sowohl die Kettenverlängerung als auch die Dispergierung vorgenommen wird, wobei die Lage der Dispergierzone die Kettenverlängerungszeit bestimmt. Die Größe der Dispergierzone bestimmt wiederum die Teilchengröße und Teilchengrößenverteilung der Dispersion. Die Größe der Dispergierzone ist jedoch stark abhängig von der Rührerdrehzahl sowie von dem Durchsatz. Auf der anderen Seite beeinflußt die Rührerdrehzahl wiederum die Ausbildung der zellaren Strömung. Das System ist somit von der exakten Einhaltung mehrerer Parameter abhängig, was in der Praxis bei Langzeitversuchen oft nicht gewährleistet ist. Zudem wird in DE-OS 2 260 870 die Abtrennung des eingesetzten Lösungsmittels mit Hilfe eines Dünnschichtverdampfers erreicht. Ein derartiger Verdampfer bringt zwar extrem kurze Verweilzeiten und gute Wärmeübergangswerte, hat aber den Nachteil, daß filmbildende Dispersionen zum Anbacken neigen.

Gemäß DE-OS 2 311 635 werden zur kontinuierlichen Herstellung von wäßrigen Polyurethandispersionen Kreiselhomogenisatoren eingesetzt, in denen die Kettenverlängerung und Dispergierung gleichzeitig erfolgt. Zur Dispergierung müssen die Prepolymeren hierbei in der Schmelze zudosiert werden, was in der Regel höhere Temperaturen erfordert. Nachteilig ist weiterhin die Kettenverlängerung in nicht homogener Phase und die Verwendung von Emulgatoren, wodurch meist grobteilige Suspensionen erhalten werden.

Gemäß DE-OS 2 344 135 werden zur kontinuierlichen Herstellung von wäßrigen Polyurethandispersionen Düsen verwendet, die nach dem Gegenstrom-Injektionsverfahren arbeiten. Hierbei kann die Zugabe des Kettenverlängerungsmittels vor, während oder nach der Durchmischung des Prepolymeren mit der wäßrigen Phase erfolgen. In allen Fällen muß jedoch das aus der Mischkammer ausgetragene Material zur Durchführung der Kettenverlängerung nachgerührt werden, d.h. die eigentliche Kettenverlängerung erfolgt hierbei auch in nicht homogener Phase, wobei meist nur grobteilige Suspensionen erhalten werden.

Es war daher die der Erfindung zugrundeliegende Aufgabe ein neues Verfahren zur kontinuierlichen

Herstellung von wäßrigen Polyurethandispersionen zur Verfügung zu stellen, welches nicht mit den genannten Nachteilen behaftet ist. Diese Aufgabe konnte durch die Bereitstellung des nachstehend näher beschriebenen erfindungsgemäßen Verfahrens gelöst werden.

Gegenstand der Erfindung ist ein Verfahren zur kontinuierlichen Herstellung von wäßrigen Polyurethandispersionen durch kontinuierliches Vermischen unter Zuhilfenahme von Dispergieraggregaten von Lösungen von

a1) Isocyanatgruppen-freien, in Wasser dispergierbaren Polyurethanen, deren Dispergierbarkeit in Wasser auf das Vorliegen von chemisch eingebauten potentiellen ionischen Gruppen und/oder von chemisch eingebauten, innerhalb von end- und/oder seitenständig angeordneten Polyetherketten vorliegenden Ethylenoxideinheiten und/oder von im Gemisch mit den Polyurethanen vorliegenden externen Emulgatoren zurückzuführen ist,

oder von

a2) freie Isocyanatgruppen aufweisenden, in Wasser dispergierbaren Isocyanat-Prepolymeren, deren Dispergierbarkeit auf das Vorliegen von chemisch eingebauten potentiellen ionischen Gruppen und/oder von chemisch eingebauten, innerhalb von end- und/oder seitenständigen Polyetherketten vorliegenden Ethylenoxideinheiten und/oder von mit den Prepolymeren im Gemisch vorliegenden, externen Emulgatoren zurückzuführen ist

in

b) organischen Lösungsmitteln eines unter 100°C liegenden Siedepunkts oder in Gemischen derartiger Lösungsmittel mit bis zu 50 Gew.-%, bezogen auf das Gesamtgewicht der Komponente b), an Wasser

mit

c) Wasser, welches gegebenenfalls ein mit den freien Isocyanatgruppen der Komponente a2) schneller als Wasser reagierendes Kettenverlängerungsmittel oder ein Neutralisationsmittel für potentielle ionische Gruppen gelöst enthält,

und anschließende destillative Entfernung zumindest der Hauptmenge des Lösungsmittels b) aus der resultierenden wäßrigen Dispersion, dadurch gekennzeichnet, daß das Abdestillieren des Lösungsmittels im Anschluß hieran kontinuierlich mittels eines Umlaufverdampfers durchführt.

Gegenstand der Erfindung ist auch die Verwendung der nach dem erfindungsgemäßen Verfahren erhaltenen wäßrigen Dispersionen als Beschichtungsmittel für beliebige Substrate oder als Klebstoff.

Der Vorteil des erfindungsgemäßen Verfahrens ist darin zu sehen, daß gegenüber dem "Acetonverfahren" deutlich bessere Raum-Zeit-Ausbeuten zu erzielen sind und die Destillation des Lösungsmittels schneller und produktschonender erfolgt, wodurch erreicht wird, daß beim erfindungsgemäßen Verfahren Produkte erhalten werden, die bezüglich ihrer Eigenschaften den Produkten des "Acetonprozesses" gleichwertig oder überlegen sind. Außerdem wurde festgestellt, daß das zum Auflösen der Komponenten a1) bzw. a2) erforderliche Lösungsmittel auch größere Mengen an Wasser enthalten kann, ohne das hierdurch die Durchführbarkeit des erfindungsgemäßen Verfahrens beeinträchtigt würde. Außerdem ist die erfindungswesentliche Verwendung von Umlaufverdampfern zum Abdestillieren des Lösungsmittels mit dem Vorteil verbunden, daß aufgrund der stets gefluteten Verdampferflächen auch bei zur Filmbildung neigenden Produkten keine Filmbildung festgestellt wird. Schließlich ist hervorzuheben, daß das erfindungsgemäße Verfahren bezüglich der Herstellung von stabilen wäßrigen Polyurethandispersionen weit "robuster" ist als das herkömmliche "Acetonverfahren", da oftmals die Beobachtung gemacht werden konnte, daß bei gleicher chemischer Zusammensetzung der Polyurethane gemäß erfindungsgemäßem Verfahren stabile wäßrige Polyurethandispersionen erhalten werden können, während gemäß "Acetonverfahren" nur instabile, sedimentierende Suspensionen resultieren.

Zur Herstellung der erfindungsgemäß zu dispergierenden Polyurethane bzw. Prepolymeren werden die üblichen Ausgangsmaterialien eingesetzt, d.h. organische Polyisocyanate, gegebenenfalls unter Mitverwendung von monofunktionellen Isocyanaten und Verbindungen mit mindesten zwei gegenüber Isocyanatgruppen reaktionsfähigen Gruppen, gegebenenfalls unter Mitverwendung von entsprechenden monofunktionellen Verbindungen.

Geeignete Polyisocyanate sind beispielsweise

(i) Diisocyanate der Formel $Q(NCO)_2$, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan, 4,4'-Diisocyanatodicyclohexylmethan, 4,4'-Diisocyanato-dicyclohexylpropan-(2,2), 1,4-Diisocyanatobenzol, 2,4-Diisocyanato-toluol, 2,6-Diisocyanatotoluol, 4,4'-Diisocyanatodiphenyl-methan, 4,4'-Diisocyanatodiphenylpropan-(2,2), p-Xylylen-diisocyanat oder α,α,α',α'-Tetramethyl-m- oder p-xylylendiisocyanat, sowie aus diesen Verbindungen bestehende Gemische.

Zu den erfindungsgemäß geeigneten Polyisocyanaten gehören auch beispielsweise

(ii) die aus der Polyurethanchemie an sich bekannten, NCO-Gruppen aufweisenden Prepolymere, wie sie durch Umsetzung von einfachen Diisocyanaten der unter (i) beispielhaft genannten Art mit organischen Polyhydroxylverbindungen, vorzugsweise Dihydroxyverbindungen der nachstehend beispielhaft genannten Art unter Einhaltung eines NCO/OH-Äquivalentverhältnisses von beispielsweise 1,2:1 bis 10:1,

vorzugsweise 1,3:1 bis 3:1 erhalten werden können. Aus dem genannten Äquivalentverhältnis ist ersichtlich, daß hier unter 'NCO-Prepolymeren" auch die sogenannten "Semiprepolymeren" zu verstehen sind, d.h. Gemische von überschüssigen, nicht umgesetzten Diisocyanaten mit echten NCO-Prepolymeren.

Weitere mögliohe Polyisocyanate sind auch beispielsweise

(iii) hydrophil modifizierte Polyisocyanate, beispielsweise seitenständige Polyetherketten mit eingebauten Ethylenoxideinheiten aufweisende Diisocyanate gemäß US-PS 3 920 598 oder sulfonierte Diisocyanate der beispielsweise in DE-OS 2 227 111 bzw. DE-OS 2 359 615 genannten Art. Die Mitverwendung derartiger, hydrophil modifizierter Polyisocyanate ist jedoch weniger bevorzugt, da die hydrophilen Gruppen erfindungsgemäß vorzugsweise über die nachstehend näher beschriebenen Aufbaukomponenten mit gegenüber Isocyanatgruppen reaktionsfähigen Gruppen eingebaut werden.

Grundsätzlich ist es auch möglich, die beispielhaft genannten Polyisocyanate, d.h. insbesondere Diisocyanate in Kombination mit höherfunktionellen niedermolekularen Polyisocyanaten wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetzen. Auch der Einsatz von monofunktionellen, Polyetherketten mit eingebauten Ethylenoxideinheiten aufweisenden Isocyanaten der beispielsweise in den US-Patentschriften 3 920 598 bzw. 4 237 264 genannten Art ist prinzipiell möglich.

Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden difunktionelle Isocyanate der oben beispielhaft genannten Art verwendet.

Geeignete Aufbaukomponenten mit gegenüber Isocyanatgruppen reaktionsfähigen Gruppen sind beispielsweise

(iv) die aus der Polyurethanchemie bekannten Polyhydroxypolyester, -polycarbonate oder -polyether des Molekulargewichtsbereichs 400-10000, vorzugsweise 400-4000, vorzugsweise die entsprechenden difunktionellen Verbindungen, wie sie in an sich bekannter Weise durch Umsetzung von mehrbasischen Säuren, insbesondere difunktionellen Säuren wie z.B. Adipinsäure, Phthalsäure, Tetrahydrophthalsäure und/oder Hexahydrophthalsäure mit überschüssigen Mengen an mehrwertigen Alkoholen, vorzugsweise zweiwertigen Alkoholen der nachstehend unter (v) beispielhaft genannten Art bzw. durch Alkoxylierung geeigneter Startermoleküle wie z.B. Wasser, Ammoniak, Anilin oder den nachstehend unter (v) beispielhaft genannten mehrwertigen Alkoholen mit Alkylenoxiden wie z.B. Ethylenoxid und/oder Propylenoxid zugänglich sind.

Für das erfindungsgemäße Verfahren geeignete Aufbaukomponenten b) sind weiterhin beispielsweise

(v) mehrwertige Alkohole, insbesondere zweiwertige Alkohole des Molekulargewichtsbereichs 62 bis 399, insbesondere die entsprechenden Alkanpolyole wie z.B. Ethylenglykol, Propylenglykol, Hexamethylendiol, Glycerin, Trimethylolpropan oder Trimethylolethan oder auch niedermolekulare, Ethergruppen aufweisende Alkohole wie z.B. Diethylenglykol, Triethylenglykol, Dipropylenglykol oder Tripropylenglykol. Beliebige Gemische derartiger Alkohole können ebenfalls beim erfindungsgemäßen Verfahren eingesetzt werden.

Weitere geeignete Aufbaukomponenten mit gegenüber Isocyanatgruppen reaktionsfähigen Gruppen sind beispielsweise

(vi) mindestens zwei aminische oder hydrazinische Aminogruppen aufweisende Verbindungen des Molekulargewichtsbereichs 32 bis 400 wie z.B. Ethylendiamin, Hexamethylendiamin, Isophorondiamin, 2,4-Diaminotoluol, 4,4'-Diaminodiphenylmethan, 4,4'-Diaminodicyclohexylmethan, Diethylentriamin, Triethylentetramin, Hydrazin bzw. Hydrazinhydrat. Derartige Aufbaukomponenten können auch in blockierter Form, d.h. insbesondere in Form der entsprechenden Ketimine bzw. Ketazine (Umsetzungsprodukte mit einfachen Ketonen wie Aceton, Methylethylketon oder Methylisobutylketon) eingesetzt werden. Bei Verwendung derartiger blockierter Kettenverlängerungsmittel erfolgt erst unter dem hydrolytischen Einfluß von Wasser eine Freisetzung der mit Isocyanatgruppen reaktionsfähigen Gruppen.

Weitere geeignete Aufbaukomponenten mit gegenüber Isocyanatgruppen reaktionsfähigen Wasserstoffatomen sind beispielsweise

(vii) ionische Aufbaukomponenten oder potentielle ionische Aufbaukomponenten, die neben zwei gegenüber Isocyanatgruppen reaktionsfähigen Gruppen mindestens eine tertiäre oder quaternäre Ammoniumgruppe oder in derartige Gruppen überführbare Gruppen, Carboxyl-, Carboxylat-, Sulfonsäure- und/oder Sulfonatgruppen aufweisen, wobei die zumindest teilweise Überführung der in Salzgruppen der genannten Art überführbare Gruppen vor oder gleichzeitig mit der Vermischung mit Wasser erfolgt. Zu den anionischen Aufbaukomponenten gehören beispielsweise die Sulfonatgruppen aufweisenden aliphatischen Diole gemäß DE-OS 2 446 440 oder DE-0S 2 437 218, Carboxylatgruppen oder in Carboxylatgruppen überführbare Carboxylgruppen aufweisenden Diole und/oder Diaminosulfonate der in CA-PS 928 323 beschriebenen Art, wie z.B. das Natriumsalz der N-(2-Aminoethyl)-2-aminoethansulfonsäure, die Dimethylolpropionsäure oder das Natriumsalz der N-(2-Aminoethyl)-2-aminopropionsäure. Zu den Aufbaukomponenten mit (potentiell) kationischen hydrophilen Gruppen gehören beispielsweise tert. Aminstickstoff aufweisende Aminoalkohole, deren tertiäre Stickstoffatome während oder nach Beendigung der Isocyanat-Polyadditionsreaktion durch Neutralisation oder Quaternierung zumindest teilweise in ternäre oder quaternäre Ammoniumgruppen überführt werden können, wie beispielsweise N-Methyl-diethanolamin, N-Butyl-diethanolamin, N-Methyl-diisopropanolamin, N-Ethyl-diethanolamin, N-Ethyl-diisopropanolamin oder N,N'-Bis-(2-hydroxyethyl)-perhydropyrazin oder auch entsprechende einwertige Alkohole wie z.B. N,N-Dimethylethanolamin, 2-(2-Dimethylamino-ethoxyy)-ethanol, N,N-Diethylethanolamin, 2-(2-Diethylamino-ethoxy)-ethanol, N,N-Di-n-butyl-aminoethanol, N-(3-Hydroxypropyl)-dimethylamin, N-(2-Hydroxypropyl)-dimethylamin, 1-Diethylamino-2-propanol oder 1,3-Bis-(dimethylamino)-2-propanol.

Hierzu gehören ferner analoge Aufbaukomponenten mit mindestens einer tert. Aminogruppe, d.h. potentiellen ternären oder quaternären Ammoniumgruppe, die anstelle der Hydroxylgruppe bzw. der Hydroxylgruppen mindestens eine primäre oder sekundäre aminische oder hydrazinische Aminogruppe aufweisen, wie z.B. N-Methyl-bis-(3-aminopropyl)-amin, N-Methyl-bis-(2-aminoethyl)-amin oder N,N',N"-Trimethyl-diethylentriamin, ferner monofunktionelle Verbindungen wie z.B. 1-Amino-2-diethylaminoethan, 1-Amino-3-dimethylaminopropan, 1-Amino-3-diethylamino-propan oder N,N-Dimethylhydrazin.

Falls in die erfindungsgemäß zu dispergierenden Polyurethane bzw. NCO-Prepolymere kationische Zentren eingebaut werden sollen, erfolgt dies vorzugsweise unter Mitverwendung von tertiäre Aminogruppen aufweisenden Aufbaukomponenten der beispielhaft genannten Art unter anschließender Überführung der eingebauten tert. Aminogruppen in die entsprechenden Ammoniumgruppen durch Neutralisation mit anorganischen oder organischen Säuren wie z.B. Salzsäure, Essigsäure, Fumarsäure, Maleinsäure, Cyanessigsäure, Milchsäure, Weinsäure, Oxalsäure, N-Methyl-N-(methylaminocarbonyl)-aminomethansulfonsäure oder Phosphorsäure oder durch Quaternierung mit geeigneten Quaternierungsmitteln wie z.B. Methylchlorid, Methyljodid, Dimethylsulfat, Benzylchlorid, Chloressigsäureethylester oder Bromace tamid. Weitere Beispiele geeigneter Neutralisations- oder Quaternierungsmittel sind in der DE-OS 2 827 156 offenbart. Grundsätzlich kann diese Neutralisation oder Quaternierung der tert. Stickstoff aufweisenden Aufbaukomponenten auch vor oder während der Isocyanat-Polyadditionsreaktion erfolgen, obwohl dies weniger bevorzugt ist. Es ist auch möglich ternäre bzw. quaternäre Ammoniumgruppen in die Polyisocyanat-Polyadditionsprodukte über tert. Aminogruppen aufweisende Polyetherpolyole unter anschließender Neutralisation bzw. Quaternierung der tert. Aminogruppen einzuführen. Auch dies ist jedoch nicht bevorzugt.

Falls in die erfindungsgemäß zu dispergierenden Polyurethane oder NCO-Prepolymere Carboxylatgruppen eingebaut werden sollen, kann dies sowohl unter Mitverwendung von Carboxylatgruppen, d.h. neutralisierten Carboxylgruppen aufweisenden Aufbaukomponenten mit gegenüber Isocyanatgruppen reaktionsfähigen Gruppen wie beispielsweise dem Triethylammoniumsalz der Dimethylolpropionsäure oder auch unter Einbau von freie Carboxylgruppen aufweisenden Verbindungen, die neben diesen Carboxylgruppen gegenüber Iso. cyanatgruppen reaktionsfähigere Gruppen aufweisen, unter anschließender Neutralisation der eingebauten Carboxylgruppen erfolgen. Eine gut geeignete Methode des Einbaus von Carboxylatgruppen besteht beispielsweise darin, bei der Herstellung der in Wasser zu dispergierenden Polyurethane bzw. NCO-Prepolymeren freie Dimethylolpropionsäure mitzuverwenden, und anschließend die Carboxylgruppe mit einem geeigneten Neutralisationsmittel, beispielsweise mit Triethylamin oder Natronlauge zu neutralisieren.

Falls der Einbau von Sulfonatgruppen in die zu dispergierenden Polyurethane bzw. NCO-Prepolymere erwünscht ist erfolgt dies zweckmäßigerweise durch Mitverwendung von Sulfonatgruppen aufweisenden Verbindungen mit gegenüber Isocyanatgruppen reaktionsfähigen Gruppen, beispielsweise den bereits obengenannten Sulfonatgruppen aufweisenden aliphatischen Diolen gemäß DE-OS 2 446 440 oder DE-OS 2 437 128.

Vorzugsweise wird die Menge der ionischen oder potentiell ionischen Aufbaukomponenten bzw. der Neutralisations- oder Quaternierungsgrad so gewählt, daß in den letztendlich erhaltenen Polyurethanen bis zu 200, vorzugsweise 1 bis 200, besonders bevorzugt 2 bis 150 und insbesondere 5 bis 100 Milliäquivalente pro 100 g Feststoff an ionischen Gruppen, insbesondere an $=N^{\oplus}=$, $-COO^{\ominus}$ oder $SO_3^{\ominus}$, vorliegen.

Grundsätzlich ist es selbstverständlich möglich, gleichzeitig Carboxylat und Sulfonatgruppen in die erfindungsgemäß zu dispergierenden Polyurethane bzw. NCO-Prepolymeren einzubauen. Auch der gleichzeitige Einbau von anionischen Gruppen (Carboxylat-und/oder Sulfonatgruppen) und von Ammoniumgruppen, entsprechend der Lehre der DE-OS 2 721 985 ist prinzipiell möglich jedoch keinesfalls bevorzugt.

Weitere Aufbaukomponenten mit gegenüber Isocyanatgruppen reaktionsfähigen Gruppen sind beispielsweise

(viii) innerhalb von Polyetherketten eingebaute Ethylenoxideinheiten aufweisende ein- oder zweiwertige Alkohole. Hierzu gehören beispielsweise Verbindungen der allgemeinen Formel

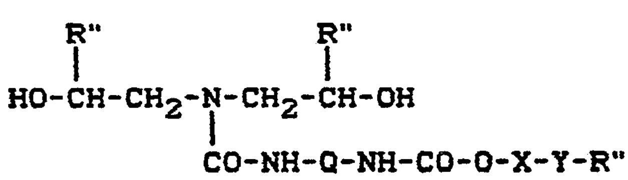

in welcher
Q für einen zweiwertigen Rest steht, wie er durch Entfernung der Isocyanatgruppen aus einem Diisocyanat der Formel $Q(NCO)_2$ der vorstehend unter (i) genannten Art erhalten wird,
R" für Wasserstoff oder einen einwertigen Kohlenwasserstoffrest mit 1 bis 8 Kohlenstoffatomen, vorzugsweise für Wasserstoff oder eine Methylgruppe steht,
R‴ für einen einwertigen Kohlenwasserstoffrest mit 1 bis 12 Kohlenstoffatomen, vorzugsweise einen unsubstituierten Alkylrest mit 1 bis 4 Kohlenstoffatomen steht,
X für einen Rest steht, wie er durch Entfernung des endständigen Sauerstoffatoms vor einer Polyalkylenoxidkette mit 5 bis 90, vorzugsweise 20 bis 70 Kettengliedern erhalten wird, welche zumindest zu 40 %, vorzugsweise zumindest zu 65 % aus Ethylenoxideinheiten bestehen und die neben Ethylenoxideinheiten auch propylenoxid-, Butylenoxid- oder Styroloxid-Einheiten darstellen können, wobei unter den letztgenannten Einheiten Propylenoxideinheiten bevorzugt sind, und
Y für Sauerstoff oder $-NR^{IV}-$ steht, wobei $R^{IV}$ bezüglich seiner Definition R‴ entspricht.

Die Herstellung der Verbindungen der letztgenannten Formeln kann gemäß den Verfahrensweisen der US-PS 3 905 929 oder der US-PS 4 190 566 erfolgen. Durch Mitverwendung derartiger Aufbaukomponenten (viii) gelingt der Einbau von innerhalb von seitenständig angeordneten Polyetherketten vorliegenden Ethylenoxideinheiten in die erfindungsgemäß zu dispergierenden Polyurethane bzw. NCO-Prepolymere.

Weitere mögliche Aufbaukomponenten mit gegenüber Isocyanatgruppen reaktionsfähigen Gruppen sind beispielsweise (ix) einwertige Alkohole der Formel

HO-X-Y-R‴

wobei
X, Y und R‴ die bereits genannte Bedeutung haben.

Bei Mitverwendung derartiger, monofunktioneller, nichtionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 3 905 929, 4 190 566 oder 4 237 264 beschrieben sind, hergestellt. Durch Mitverwendung derartiger einwertiger Alkohole gelingt der Einbau von endständigen, Ethylenoxideinheiten aufweisenden Polyetherketten in die erfindungsgemäß zu dispergierenden Polyurethane bzw. NCO-Prepolymere.

Die beispielhaft genannten hydrophile Polyetherketten aufweisenden Aufbaukomponenten mit gegenüber Isocyanatgruppen reaktionsfähigen Gruppen werden bei der Herstellung der erfindungsgemäß zu dispergierenden Polyurethane bzw. NCO-Prepolymere in solchen Mengen mitverwendet, daß der Gehalt der letztendlich dispergiert erhaltenen Polyurethane an, innerhalb von end- oder seitenständig angeordneten Polyetherketten vorliegenden Ethylenoxideinheiten, bezogen auf Feststoff, bei 0 bis 25, vorzugsweise 0 bis 15 Gew.-% liegt. Grundsätzlich sollte die Menge der in die Polyurethane eingebauten ionischen und nichtionisch-hydrophilen Gruppen so bemessen sein, daß die Dispergierbarkeit der Polyurethane in Wasser gewährleistet ist, es sei denn, man möchte die Dispergierbarkeit in Wasser ganz oder teilweise durch Mitverwendung von externen Emulgatoren bewirken. So ist es grundsätzlich möglich, jedoch keinesfalls bevorzugt, auf den Einbau von hydrophilen Zentren der beispielhaft genannten Art ganz oder teilweise zu verzichten und die Hydrophilie durch Mitverwendung von externen Emulgatoren zu bewirken.

Bei diesen Hilfsmitteln handelt es sich um chemisch nicht fixierte, vorzugsweise nicht-ionische Emulgatoren wie beispielsweise ethoxyliertes Nonylphenol, Polyoxyethylenlaurylether oder Polyoxyethylenlaurat, -oleat oder -stearat, wobei diese Zusatzmittel im allgemeinen 8 bis 50 Oxyethyleneinheiten pro Molekül aufweisen. Diese externen Emulgatoren können den erfindungsgemäß zu dispergierenden Polyurethanen oder NCO-Prepolymeren vor dem Dispersionsschritt zugesetzt werden.

Weitere gegebenenfalls mitzuverwendende Aufbaukomponenten mit gegenüber Isocyanatgruppen reaktionsfähigen Gruppen sind beispielsweise
(x) primäre und/oder sekundäre Aminogruppen aufweisende Aminoalkohole des Molekulargewichtsbereichs 61 bis 300 wie z.B. Ethanolamin, Propanolamin, Diethanolamin oder Dipropanolamin.

Schließlich ist als weitere erfindungsgemäß geeignete Aufbaukomponente mit gegenüber Isocyanatgruppen reaktionsfähigen Gruppen (xi) Wasser zu nennen, welches die Doppelfunktion der kontinuierlichen Phase der erfindungsgemäßen Dispersionen einerseits und die eines Kettenverlängerungsmittels andererseits übernehmen kann.

Vorzugsweise werden bei der Herstellung der erfindungsgemäß zu dispergierenden Polyurethane bzw. NCO-Prepolymeren difunktionelle Aufbaukomponenten der beispielhaft genannten Art eingesetzt. Es ist jedoch, wie bereits ausgeführt, auch möglich, monofunktionelle Aufbaukomponenten oder, zwecks Erreichens einer gegebenenfalls erwünschten Molekülverzweigung, höher als difunktionelle Aufbaukomponenten mitzuverwenden.

Die Lösungsmittel b) weisen bei Normaldruck einen unter 100°C liegenden Siedepunkt auf und sind vorzugsweise gegenüber Isocyanatgruppen inert. Derartige Lösungsmittel sind beispielsweise Benzol, Essigsäureethylester, Aceton, Methylethylketon, Diethylether, Tetrahydrofuran, Essigsäuremethylester, Acetonitril, Chloroform, Methylenchlorid, Tetrachlorkohlenstoff, 1,2-Dichlorethan, 1,1,2-Trichlorethan oder Tetrachlorethylen. Bevorzugt werden mit Wasser mischbare Lösungsmittel, ganz besonders bevorzugt Aceton verwendet. In speziellen Fällen, wenn nämlich das Lösungsmittel kontinuierlich zugemischt wird, können jedoch auch solche Lösungsmittel eingesetzt werden, die gegenüber Isocyanatgruppen nicht inert sind und unter Normaldruck einen unter 100°C liegenden Siedepunkt aufweisen. Hierzu gehören beispielsweise Alkohole wie Methanol, Ethanol oder Isopropanol. Das in den erfindungsgemäß mit Wasser zu vermischenden Lösungen vorliegende Lösungsmittel b) kann im übrigen zu bis zu 50 Gew.-%, vorzugsweise zu bis zu 30 Gew.-%, besonders bevorzugt bis zu 20 Gew.-%, bezogen auf das Gesamtgewicht der Komponente b) aus Wasser bestehen. Dieses Wasser kann beispielsweise durch Verwendung von nicht getrocknetem Lösungsmittel oder beispielsweise auch durch Verwendung von wäßrigen Lösungen bestimmter Aufbaukomponenten bei der Herstellung der Polyurethane a1) bzw. Prepolymere a2) eingeführt worden sein. Derartige wässrige Lösungen von Aufbaukomponenten sind beispielsweise wässrige Lösungen von aminischen Kettenverlängerungsmitteln. Im Falle der Verwendung derartiger wässriger Lösungen werden diese vorzugsweise kontinuierlich mit einer vorab hergestellten organischen, vorzugsweise azetonischen Lösung des NC0-Prepolymeren kontinuierlich vermischt und die hierbei entstandene wässrig/organische Lösung gegebenenfalls nach Durchlaufen einer Verweilzeitstufe, beispielsweise in Form von Schlangenrohren oder Kesselkaskaden kontinuierlich dem erfindungsgemäßen Dispergierschritt zugeführt. Je nach vorliegendem Äquivalentverhältnis zwischen Isocyanatgruppen des Prepolymeren und dem in wässriger Lösung vorliegenden Kettenverlängerungsmittel und in Abhängigkeit von der Verweilzeit, die beliebig lange, vorzugsweise bis zu 15 Minuten beträgt, entstehen hierbei wässrig/organische Lösungen von ausreagierten, Isocyanatgruppen-freien Polyurethanen oder von noch nicht völlig ausreagierten, noch freie Isocyanatgruppen aufweisenden Prepolymeren, die dem erfindungsgemäßen Dispergierschritt zugeführt werden. Falls zur Herstellung der Lösungen der NCO-Prepolymeren wasserhaltige Lösungsmittel verwendet werden, erfolgt ebenfalls vorzugsweise eine kontinuierliche Durchmischung des zu lösenden NCO-Prepolymeren mit dem wässrigen Lösungsmittel.

Die Herstellung der Polyurethane a1) bzw. der NCO-Prepolymeren a2) erfolgt in an sich bekannter Weise. Sie kann beispielsweise dergestalt erfolgen, daß man zunächst in der Schmelze bei 20 bis 150, vorzugsweise 20 bis 130°C aus organischen Diisocyanaten der oben unter (i) beispielhaft genannten Art, gegebenenfalls unter Mitverwendung von hydrophil modifizierten Polyisocyanaten der unter (iii) beispielhaft genannten Art und Verbindungen mit gegenüber Isocyanatgruppen reaktionsfähigen Gruppen der unter (iv), und gegebenenfalls (v), (vii), (viii) und/oder (ix) genannten Art unter Einhaltung eines Äquivalentverhältnisses von Isocyanatgruppen zu gegenüber Isocyanatgruppen reaktionsfähigen Gruppen von beispielsweise 1,2:1 bis 5:1, vorzugsweise 1,2:1 - 3:1 ein NCO-Prepolymer a2) hergestellt. Dieses NCO-Prepolymer kann, falls es nicht bereits in einem Lösungsmittel hergestellt worden ist, anschließend in einem Lösungsmittel der beispielhaft genannten Art, welches, wie oben ausgeführt, bereits ein Wassergehalt von bis zu 50 Gew.-% aufweisen kann, aufgenommen und der erfindungsgemäßen Dispergierung in Wasser zugeführt werden. Mann kann, wie oben bereits angedeutet, die genannte Lösung auch mit einem, gegebenenfalls in Wasser gelösten, aminischen Kettenverlängerungsmittel der oben unter (vi) oder (vii) beispielhaft genannten Art unter Einhaltung eines Äquivalentverhältnisses von Isocyanatgruppen des Prepolymeren zu Aminogruppen des Kettenverlängerungsmittels von 0,7:1 bis 1:0,2, vorzugsweise 0,8:1 bis 1:0,4, gegebenenfalls unter Nachschaltung der bereits oben genannten Nachreaktionszone in ein ausreagiertes Polyurethan bzw. ein kettenverlängertes NCO-Prepolymer überführen.

Eine weitere Variante bestünde beispielsweise darin, vorab hergestellte NCO-Prepolymere der oben unter (ii) beispielhaft genannten Art in einem Lösungsmittel der beispielhaft genannten Art zu lösen und mit einem ionisch modifizierten Diamin der unter (vii) beispielhaft genannten Art, welches gegebenenfalls in Form einer wäßrigen Lösung zum Einsatz gelangt, zu modifizieren. Falls diese Modifizierungsreaktion unter Verwendung eines NCO-Überschusses, bezogen auf die Aminogruppen des Kettenverlängerungsmittels, vorgenommen wird entsteht eine Lösung eines Prepolymeren a2) in dem Lösungsmittel b). Falls diese Modifizierung unter Verwendung einer mindestens äquivalenten Menge des Kettenverlängerungsmittels durchgeführt wird, entsteht eine Lösung eines ausreagierten Polyurethans a1) in dem Lösungsmittel b).

Eine weitere Variante der Herstellung einer für das erfindungsgemäße Verfahren geeigneten Lösung bestünde beispielsweise darin, ein vorab hergestelltes NCO-Prepolymer der oben unter (ii) beispielhaft genannten Art mit einem externen Emulgator zu versetzen, so daß die Dispergierbarkeit des NCO-Prepolymeren in Wasser im Unterschied zu den oben beschriebenen Ausführungsformen durch das Vorliegen eines externen Emulgators gewährleistet ist. Den oben gemachten Ausführungen entsprechend könnten kationisch modifizierte NCO-Prepolymere bzw. Polyurethane dadurch hergestellt werden, daß man als Aufbaukomponente tert. Stickstoffatome aufweisende Kettenverlängerungsmittel der unter (vii) beispielhaft genannten Art mitverwendet, und die tert. Stickstoffatome durch Neutralisation mit einer Säure oder Quaternierung zumindest teilweise in Ammoniumgruppen überführt.

Gemäß einer besonders bevorzugten Ausführungsform des erfindungsgemäßen Verfahrens wird ein vorab aus den beispielhaft genannten Ausgangsmaterialien hergestelltes NCO-Prepolymer kontinuierlich mit einem bis zu 50 Gew.-% Wasser enthaltenden Lösungsmittel gelöst und die so erhaltene Lösung kontinuierlich mit einer gegebenenfalls wasserenthaltenden wässrigen Lösung eines Kettenverlängerungsmittels (vi) und/oder (vii) kontinuierlich vermischt und die so erhaltene Mischung, gegebenenfalls nach Durchlaufen der obengenannten Verweilstufe, dem Dispergierschritt zugeführt.

Bei allen, hier genannten kontinuierlichen Mischvorgängen können die nachstehend beispielhaft genannten, kontinuierlich arbeitenden Mischaggregate verwendet werden.

Bei allen Ausführungsformen der Herstellung der beim erfindungsgemäßen Verfahren einzusetzenden Lösungen muß jedoch darauf geachtet werden, daß der Wassergehalt der Lösungen, bezogen auf das Gesamtgewicht der Komponente b), 50 Gew.-% vorzugsweise 30 Gew.-% nicht übersteigt. Falls die Komponente b) zumindest zu 50 % vorzugsweise zumindest zu 70 % aus organischen Lösungsmitteln besteht liegen stets echte Lösungen der NCO-Prepolymeren bzw. Polyurethane in organischem Medium vor, die erst durch die erfindungsgemäße Durchmischung mit (weiterem) Wasser in eine wäßrige Dispersion überführt werden.

Grundsätzlich kann die Herstellung der beim erfindungsgemäßen Verfahren in eine wäßrige Dispersion zu überführenden NCO-Prepolymeren bzw. Polyurethane auch unter Mitverwendung der aus der Polyurethanchemie an sich bekannten Hilfs- und Zusatzmittel erfolgen. Hierzu gehören beispielsweise die aus der Polyurethanchemie an sich bekannten Beschleuniger für die Isocyanat-Polyadditionsreaktion. Im allgemeinen ist die Mitverwendung dieser Katalysatoren jedoch nicht erforderlich. Weitere Hilfs- und Zusatzmittel sind beispielsweise Lösungsmittel, die unter Normaldruck einen über 100°C liegenden Siedepunkt aufweisen wie beispielsweise Diisopropylketon, Xylol, Dimethylformamid, Dimethylacetamid, Dimethylsulfoxid, Methylglykolacetat, Ethylglykolacetat, Butylacetat oder N-Methylpyrrolidon. Diese Lösungsmittel würden letztendlich in den erfindungsgemäßen Dispersionen verbleiben.

Weitere Hilfs- und Zusatzmittel sind beispielsweise die üblichen inerten Füllstoffe, Pigmente, Farbstoffe, Weichmacher oder die reologischen Eigenschaften beeinflussende Zusätze.

Wie oben bereits angedeutet, ist es auch möglich, bei der Herstellung der Polyurethane bzw. NCO-Prepolymeren solche Lösungsmittel mitzuverwenden, die gegenüber Isocyanatgruppen reaktionsfähige Gruppen aufweisen, beispielsweise die in diesem Zusammenhang obengenannten einwertigen Alkohole. Diese einwertigen Alkohole könnten beispielsweise als Lösungsmittel für aminische Kettenverlängerungsmittel mitverwendet werden, da die Reaktivität der Aminogruppen dieser Kettenverlängerungsmittel gegenüber Isocyanatgruppen weit höher ist als die Reaktivität der Hydroxylgruppen der Lösungsmittel, so daß die einwertigen Alkohole nicht in die Polyurethane bzw. NCO-Prepolymeren eingebaut würden.

Die beim erfindungsgemäßen Verfahren einzusetzenden Lösungen von a1) Polyurethanen oder von a2) NCO-Prepolymeren in b) gegebenenfalls wasserhaltigen Lösungsmitteln weisen im allgemeinen einen Gehalt an a1) bzw. a2) von 10 bis 95 Gew.-% auf. Falls Lösungen von Prepolymeren a2) zum Einsatz gelangen, weisen diese Prepolymeren, bezogen auf Feststoff, im allgemeinen einen NCO-Gehalt von 0,01 bis 5, vorzugsweise 0,1 bis 2 Gew.-% auf. Insbesondere bei Vorliegen von nur wenig freien NCO-Gruppen reagieren diese im allgemeinen mit dem Wasser, welches bereits Bestandteil der Komponente b) ist oder spätestens mit der Hauptmenge des Wassers unter Kettenverlängerung ab. Falls beim erfindungsgemäßen Verfahren Lösungen von Prepolymeren a2) mit einem vergleichsweise hohen NCO-Gehalt eingesetzt werden, ist es oft empfehlenswert, die Lösungen nicht mit reinem Wasser sondern mit wäßrigen Lösungen von aminischen oder hydrazinischen Kettenverlängerungsmitteln der unter (vi) beispielhaft genannten Art zu durchmischen, so daß im Anschluß an die erfindungswesentliche Durchmischung der Lösungen mit Wasser eine Kettenverlängerung zum hochmolekularen, Harnstoffgruppen aufweisenden Polyurethan stattfindet. Es ist somit möglich, im Falle der Herstellung von Amin-verlängerten Polyurethan-Polyharnstoffen, die Kettenverlängerung mit dem aminischen Kettenverlängerungsmittel sowohl vor als auch nach der Dispergierstufe durchzuführen.

Prinzipiell ist es auch möglich, Lösungen von Polyurethanen a1) oder von Prepolymeren a2) in gegebenenfalls wäßrigem Lösungsmittel b) einzusetzen, in denen potentielle ionische Gruppen (tert. Stickstoffatome, Carboxyl- oder Sulfonsäuregruppen) in in das Polyurethan bzw. NCO-Prepolymer eingebauter Form vorliegen, die erst während der Durchmischung mit dem Wasser in ionische Gruppen überführt werden. In einem solchen Falle würde nicht reines Wasser sondern eine Lösung eines entsprechenden Neutralisationsmittels in Wasser zum Einsatz gelangen, so daß die Überführung der potentiellen ionischen Gruppen in ionische Gruppen durch eine Neutralisationsreaktion mit der Durchmischung einhergeht. Diese Arbeitsweise ist jedoch weniger bevorzugt. Eine weitere, weniger bevorzugte Variante bestünde darin, den gegebenenfalls mitverwendeten externen Emulgator nicht der organischen Lösung sondern dem Wasser, mit dem die organische Lösung durchmischt wird, einzuverleiben.

Grundsätzlich ist es auch möglich, bei der Dispergierung der Polyurethane bzw. der NCO-Prepolymeren a1) bzw. a2) anstelle von Wasser bzw. von Lösungen der genannten Zusatzmittel in Wasser Gemische aus (i) Wasser oder wäßrigen Lösungen der genannten Zusatzmittel mit (ii) wäßrigen Polymerlactices, die mit den erfindungsgemäßen Polyurethandispersionen verträglich sind, zu verwenden. Derartige Polymerlatices sind beispielsweise wäßrige Disperionen von Polyvinylacetat, Polyethylen, Polystyrol, Polybutadien, Polyvinylchlorid, Polyacrylat oder von Copolymerisaten der diesen Polymeren entsprechenden Monomeren oder auch wässrige Polyurethandispersionen. Im Falle der Verwendung derartiger Gemische entstehen beim erfindungsgemäßen Verfahren modifizierte Polyurethandispersionen, deren Eigenschaften nicht nur durch die Art der erfindungswesentlichen Polyurethane sondern auch die Art der genannten Polymeren bestimmt ist.

Die Menge des Wassers, mit welchem die Lösung des Polyurethans a1) bzw. des NCO-Prepolymeren a2) in gegebenenfalls wäßrigem Lösungsmittel b) vermischt wird, liegt im allgemeinen bei 0,3 bis 5, vorzugsweise 0,3 bis 2 Gew.-Teilen Wasser pro Gewichtsteil der besagten Lösung, sie wird jedenfalls so bemessen,daß nach der Durchmischung eine Dispersion ("Öl-in-Wasser-Dispersion") vorliegt, während es sich bei der besagten Lösung um eine wasserfreie Lösung oder eine "Wasser-in-Öl-Emulsion" handelt.

Die Durchmischung der Lösungen der Polyurethane a1) bzw. der NCO-Prepolymeren a2) in dem gegebenenfalls wäßrigen Lösungsmittel b) mit der Hauptmenge des Wassers (bzw. einer wäßrigen Lösung eines Kettenverlängerungs- bzw. Neutralisationsmittels) erfolgt in geeigneten, kontinuierlich arbeitenden Mischaggregaten. Bei diesen Mischaggregaten handelt es sich vorzugsweise um Rotor-Stator-Systeme wie beispielsweise Durchflußmischer der Firmen Ekato RMT (Schopfheim; Bundesrepublik Deutschland), Lightnin (Neu-Isenburg; Bundesrepublik Deutschland) oder Stachelrührer wie sie beispielsweise von der Fa. Maschinenfabrik Hennecke GmbH (5205 St. Augustin 1, Bundesrepublik Deutschland) hergestellt werden, sowie Kreiselhomogenisiermaschinen, z.B. eine Supraton®-Maschine der Firma Supraton Auer & Zucker (OHG (Norf; Bundesrepublik Deutschland) oder ein Dispax®-Reaktor der Firma Jahnke & Kunkel KG (Staufen; Bundesrepublik Deutschland) oder Dispergiermaschinen, wie sie in DE-OS 3 319 921 beschrieben werden. Die Dispergierleistung beträgt je nach verwendetem Mischertyp und Viskosität der zu vermischenden Komponenten etwa 0,3 bis 10 kW pro Liter Mischerinhalt.

Desweiteren können zur Dispergierung bevorzugt auch z.B. die in DE-OS 2 344 135 beschriebenen Gegenstrominjektionsdüsen oder auch Gleichstrominjektionsdüsen eingesetzt werden.

Kontinuierlich arbeitende Mischaggregate der beispielhaft genannten Art können, wie bereits oben angedeutet, im übrigen auch bereits zur Herstellung der Lösungen (Vermischung von NCO-Prepolymeren mit Lösungsmittel) oder zur Modifizierung der Lösungen (beispielsweise Kettenverlängerung der gelösten NCO-Prepolymeren mit aminischen Kettenverlängerungsmitteln) oder aber auch zur Zugabe des Quaternierungs- bzw. Neutralisationsmittels zu potentielle ionische Gruppen der beispielhaft genannten Art aufweisenden Polyurethanen bzw. NCO-Prepolymeren verwendet werden. Hierzu können jedoch auch neben den obengenannten auch statische Mischer wie beispielsweise Mischer mit einfachen Einbauten (z.B. Wendel beim Static Mixer® der Firma Kenics Corp.; USA), Mehrkanal-Mischer (z.B. AMK-Ross-ISG-Mischer der Aachener Misch- und Knetmaschinen-Fabrik, Bundesrepublik Deutschland) oder sogenannte Packungsmischer, wie z.B. der statische Mischer der Firma Sulzer AG (Winterthur, Schweiz) und der BMK-Mischer der Bayer AG, (Leverkusen, Bundesrepublik Deutschland) eingesetzt werden.

Im Anschluß an die kontinuierliche Durchmischung der genannten Lösungen mit dem Wasser erfolgt eine kontinuierliche destillative Entfernung der Hauptmenge des in den Dispersionen vorliegenden Lösungsmittels. Bei den hierbei eingesetzten Destillationsaggregaten handelt es sich vorzugsweise um Verdampferbauarten mit gefluteten Verdampferflächen z.B. Umlaufverdampfer mit außenliegendem Heizregister, Rober-Verdampfer, Herbert-Verdampfer, Langrohr-Verdampfer wie sie in Ullmanns Enzyclopädie der technischen Chemie, Band 2, Seite 653-655 beschrieben sind.

Die Destillation erfolgt im allgemeinen innerhalb des Temperaturbereichs von 20 bis 100°C, vorzugsweise von 30 bis 90°C unter einem Druck von 5 bis 1100 mbar vorzugsweise10 bis 300 mbar.

Zwecks Erreichens eines niedrigen Restlösungsmittelsgehalts kann es gegebenenfalls erforderlich sein, die Destillation in mehr als einer Stufe durchzuführen. Erfindungswesentlich ist jedoch die Verwendung der oben beschriebenen kontinuierlich arbeitenden Umlaufverdampfer in der ersten Stufe. Bevorzugt werden in den weiteren Destillationsstufen ebenfalls Umlaufverdampfer eingesetzt, jedoch ist es hier im Sinne der Erfindung auch möglich, andere Verdampfer wie z.B. Durchlaufverdampfer oder Kesselverdampfer einzusetzen.

In einer besonderen Ausführungsform des erfindungsgemäßen Verfahrens wird das nach der Destillation erhaltene Lösungsmittel, das bis zu 50 Gew.-%, bevorzugt bis zu 30 Gew.-%, besonders bevorzugt 0 bis 20 Gew.-% Wasser enthalten kann, zur Herstellung der Lösungen der Polyurethane a1) bzw. NCO-Prepolymeren a2) in gegebenenfalls wasserhaltigem Lösungsmittel b) an den Prozeßanfang zurückgeführt. Wird die Destillation des Lösungsmittels aus der wäßrigen Dispersion in mehr als einer Stufe durchgeführt, werden vorzugsweise nur die Destillate unmittelbar wiederverwendet, die einen Gehalt an Wasser bis zu 50 Gew.-%, bevorzugt von 0 bis 30 Gew.-%, besonders bevorzugt von 0 bis 20 Gew.-% Wasser enthalten. Gegebenenfalls kann es zur Sicherstellung des genannten Miximalgehaltes des Lösungsmittels an Wasser erforderlich sein, die Destillation unter Verwendung einer Destillationskolonne durchzuführen. Selbstverständlich ist es auch möglich, die Lösungsmitteldestillate in einem gesonderten Arbeitsschritt ganz oder teilweise von Wasser zu befreien, so daß der Gehalt an Wasser innerhalb der obengenannten Grenzen liegt, um das Destillat erneut am Prozeßanfang einsetzen zu können.

Als "Destillationsrückstand" fällt bei der destillativen Abtrennung der Hauptmenge des Lösungsmittels eine wäßrige Dispersion Lösung eines, gegebenenfalls Harnstoffgruppen aufweisenden Polyurethans mit einem Feststoffgehalt von bis zu 60 Gew.-%, vorzugsweise von 15 bis 60 Gew.-% und insbesondere von 25 bis 50 Gew.-% an. Diese Dispersion kann neben den gegebenenfalls vorliegenden, höhersiedenden Lösungsmitteln noch bis zu 25 Gew.-%, bezogen auf das Gesamtgewicht der Dispersion, an Lösungsmitteln eines bei Normaldruck unter 100°C liegenden Siedepunkts aufweisen.

Im Falle der Verwendung von NCO-Prepolymeren werden diese spätestens während des im allgemeinen bei erhöhter Temperatur ablaufenden Destillationsprozesses durch Kettenverlängerung mit Wasser oder mit in Wasser gelöstem aminischen Kettenverlängerungsmittel in hochmolekulare Polyurethane überführt.

Die so erhaltenen wäßrigen Dispersionen können gewünschtenfalls im Anschluß an ihre Herstellung entsprechend der Lehre der DE-OS 2 708 442 mit Polyisocyanaten modifiziert werden.

Die Dispersionen können gegebenenfalls mit anderen Dispersionen verschnitten werden, wie z.B. mit Polyvinylacetat, Polyethylen-, Polystyrol-, Polybutadien-, Polyvinylchlorid-, Polyacrylat- und Copolymerisat-Kunststoff-Dispersionen. Auch der Zusatz von an sich bekannten chemisch nicht fixierten vorzugsweise ionischen Emulgatoren ist möglich jedoch selbstverständlich nicht erforderlich.

Schließlich können auch Füllstoffe, Weichmacher, Pigmente, Ruß- und Kieselsäuresole, Aluminium-, Ton-, Asbest-Dispersionen in die Dispersionen eingearbeitet werden.

Die Dispersionen sind meist stabil, lager- und versandfähig und können zu beliebig späterem Zeitpunkt, z.B. formgebend verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen. Je nach der gewählten chemischen Zusammensetzung und dem Gehalt an Urethangruppen erhält man Polyurethane mit unterschiedlichen Eigenschaften. So können weiche klebrige Massen, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

Die Dispersionen sind im Prinzip für alle Einsatzgebiete von wäßrigen Polyurethandispersionen geeignet, wie sie beispielsweise in US-PS 3 479 310, Kolonne 9, Zeilen 11-38 beschrieben sind. Die Dispersionen eignen sich insbesondere auch zur Herstellung von Glasfaserschlichten, als Vliesbinder oder als Weichmacher für Gelatine oder in Wasser dispergierte Kunststoffe.

In den nachfolgenden Beispielen beziehen sich alle Prozentangaben auf Gewichtsprozente.

<u>Beispiel 1</u>

In einem Stachelmischer (Kammervolumen 1,5 1, Drehzahl 1800 U/min) wird eine Prepolymerlösung mit einem NCO-Gehalt von 0,94 Gew.-%, hergestellt aus Hexamethylendiisocyanat und einem Hydroxylgruppen aufweisenden Mischpolyester aus Adipinsäure, Hexandiol-1,6 und Neopentylglykol (Gewichtsverhältnis der Diole = 11:6) mit einem mittleren Molekulargewicht von 1700 und gelöst in Aceton zu einer 27 %igen Lösung, mit einer 15 %igen wäßrigen Lösung von N-(2-Aminoethyl)-2-aminoethansulfonsäure-Natriumsalz vermischt. Die Prepolymerlösung sowie die wäßrige Lösung des Kettenverlängerungsmittels werden mit Hilfe von Kolbenpumpen aus Vorratstanks gefördert, wobei die Prepolymerlösung eine Temperatur von 50°C aufweist und mit 90 kg/h gefördert wird und die Kettenverlängererlösung eine Temperatur von 21°C aufweist und mit 13,8 kg/h gefördert wird. Nach dem Stachelmischer durchläuft die Lösung ein spiralförmig gewundenes Rohr mit einem Volumen von 4,2 l und erreicht nach einer Gesamtverweilzeit von ca. 3,3 min einen zweiten Mischreaktor (®Supratonmaschine, Hersteller: Supraton Auer & Zucker OHG, 4040 Neuss-Norf), in dem die kettenverlängerte Lösung mit Wasser vermischt wird, welches eine Temperatur von 21°C aufweist und mit 60 kg/h gefördert wird. Die so erhaltene Dispersion durchläuft einen Zwischenbehälter, aus dem sie in einen kontinuierlich betriebenen Umlaufverdampfer (bestehend aus 2 Schneckenwärmetauschern, Typ WAT 15, sowie einer Abschlußhaube, Typ ABS 300/100 der Fa. Schott-Glaswerke, Mainz) gelangt, wo sie bei einemDruck von ca. 190 mbar d einer Temperatur von 45°C von der Hauptmenge des Acetons befreit wird. Das hierbei anfallende Aceton weist einen Wassergehalt von ca. 12 % auf. Aus dem Produktkreislauf im Umlaufverdampfer wird die von der Hauptmenge des Acetons befreite wäßrige Dispersion als Seitenstrom entnommen. Die Dispersion weist noch einen Restgehalt an Aceton von ca. 10 % auf und wird kontinuierlich in einen Destillationskessel gefördert, aus welchem bereits während des Einleitens der Dispersion fortlaufend weiteres Aceton bei einem Druck von 110 bar und einer Temperatur von 45°C abdestilliert wird. Nach Beendigung des kontinuierlichen Herstellungsprozesses befindet sich die Gesamtmenge der wäßrigen Dispersion in dem Destillationskessel, aus welchem während weiterer 30 Minuten unter den genannten Bedingungen weiteres Aceton abdestilliert wird. Man erhält so letztendlich eine stabile wäßrige Dispersion, die das Aussehen einer opaken Lösung hat und einen Feststoffgehalt von 27 % und einen Gehalt an Sulfonatgruppen, von 41,5 Milliäquivalenten pro 100 g Feststoff aufweist. Die Dispersion ist während 15 Minuten zentrifugenstabil (3000 U/min).

<u>Beispiel 2</u> (Vergleichsbeispiel zu Beispiel 1)

243,6 kg der Prepolymerlösung aus Beispiel 1 werden in einem 500 l Kessel mit 37,35 kg der 15 %igen wäßrigen Kettenverlängererlösung aus Beispiel 1 bei 50°C versetzt und 10 min verrührt. Anschließend wird mit 162 kg Wasser dispergiert und das Lösungsmittel unmittelbar anschließend im Vakuum abgezogen.

Man erhält eine opake Lösung mit einem Feststoffgehalt von 27 Gew.-% und einem Gehalt an $SO_3$-Gruppen von 41,5 mÄqu/100 g Feststoff. Setzt man eine Probe der Dispersion dem Schwerefeld einer Zentrifuge aus (3000 U/Min$^{-1}$, 15 min), so ist ein Bodensatz eines feinkörnigen Sediments zu erkennen.

Beispiel 3

In einem Stachelmischer (Kammervolumen 1,5 l, Drehzahl 1800 U/min) wird eine Prepolymerlösung mit einem NCO-Gehalt von 0,95 Gew.-%, hergestellt aus Hexamethylendiisocyanat und dem in Beispiel 1 genannten Mischpolyester in einem NCO/OH-Äquivalentverhältnis von 1,79:1 und gelöst in Aceton zu einer 29 %igen Lösung, mit einer 10,5 %igen wäßrigen Lösung von N-(2-Aminoethyl)-2-aminoethansulfonsäure-Natriumsalz (AAS) und Ethylendiamin (ADA) (Molverhältnis AAS:ADA = 1:3) vermischt. Die Prepolymerlösung sowie die wäßrige Lösung des Kettenverlängerungsmittels werden mit Hilfe von Kolbenpumpen aus Vorratstanks gefördert, wobei die Prepolymerlösung eine Temperatur von 50°C aufweist und mit 90 kg/h gefördert wird und die Kettenverlängererlösung eine Temperatur von 21°C aufweist und mit 5,28 kg/h gefördert wird. Nach dem Stachelmischer durchläuft die Lösung ein spiralförmig gewundenes Rohr mit einem Volumen von 4,2 l und erreicht nach einer Gesamtverweilzeit von ca. 3,6 min einen zweiten Mischreaktor (Supratonmaschine), in dem die kettenverlängerte Lösung mit Wasser vermischt wird, welches eine Temperatur von 21°C aufweist und mit 40,5 kg/h gefördert wird. Nach der Dispergierung durchläuft das Produkt einen Zwischenbehälter, aus dem es mit Hilfe des am Umlaufverdampfer anliegenden Vakuum von 190 mbar in den in Beispiel 1 beschriebenen Verdampfer gefördert wird. Die weitere Aufarbeitung, d.h. destillative Entfernung von Lösungsmittel erfolgt in Analogie zu Beispiel 1.

Man erhält letztendlich eine stabile feinteilige Dispersion mit einem Feststoffgehalt von 40 Gew.-% und einem Gehalt an $SO_3$-Gruppen von 5,6 mÄqu/100 g Feststoff.

Beispiel 4 (Vergleichsbeispiel zu Beispiel 3)

300,1 kg der Prepolymerlösung aus Beispiel 3 werden in einem 500 l Kessel mit 17,7 kg der 10,5 %igen wäßrigen Kettenverlängererlösung aus Beispiel 3 bei 50°C versetzt und 10 min verrührt. Anschließend wird mit 135 kg Wasser dispergiert und das Lösungsmittel unmittelbar anschließend im Vakuum abgezogen.

Man erhält eine grobteilige, nach kurzer Zeit sedimentierende Suspension mit einem Feststoffgehalt von 40 Gew.-% und einem Gehalt an $SO_3$-Gruppen von 5,6 mÄqu/100 g Feststoff.

Beispiel 5

In einem Stachelmischer (Kammervolumen 1,5 l, Drehzahl 1800 U/min) wird ein Prepolymer mit einem NCO-Gehalt von 3,11 Gew.-%, hergestellt aus Hexamethylendiisocyanat und einem Hydroxylgruppen aufweisenden Mischpolyester aus Adipinsäure, Hexandiol-1,6 und Neopentylglykol (Gewichtsverhältnis der Diole = 11:6) mit einem mittleren Molekulargewicht von 2000 in einem NCO/OH-Äquivalentverhältnis von 1,9;1, mit einer wäßrigen Acetonlösung, die einen Wassergehalt von 10 % aufweist, kontinuierlich vermischt, wobei das Prepolymer eine Temperatur von 90°C und die wäßrige Acetonlösung eine Temperatur von 21°C aufweisen.

Das Prepolymer wird hierzu durch eine auf 90°C beheizte Rohrleitung mit Hilfe einer Zahnradpumpe mit 30 kg/h und das wäßrige Aceton, welches kontinuierlich aus der Destillationsvorlage des Umlaufverdampfers entnommen wird, wobei zu Beginn des Versuches ca. 10 kg wäßriges Aceton vorgelegt werden, mit Hilfe einer Kolbenpumpe mit ca. 57 kg/h gefördert. Das gelöste Prepolymer wird unmittelbar anschließend in einem zweiten Stachelmischer mit einer 10 %igen wäßrigen Lösung von N-(2-Aminoethyl-2-aminoethansulfonsäure-Natriumsalz (AAS) und Ethylendiamin (ADA) (Molverhältnis AAS:ADA = 1:0,75) vermischt. Die wäßrige Lösung des Kettenverlängerungsmittels wird mit Hilfe einer Kolbenpumpe aus einem Vorratstank gefördert, wobei die Kettenverlängererlösung eine Temperatur von 21°C aufweist und mit 10,5 kg/h gefördert wird. Nach dem Stachelmischer durchläuft die Lösung ein spiralförmig gewundenes Rohr mit einem Volumen von 4,2 l und erreicht nach einer Gesamtverweilzeit von ca. 3,5 min einen dritten Mischreaktor (Stachelmischer), in dem die kettenverlängerte Lösung mit Wasser vermischt wird, welches eine Temperatur von 21°C aufweist und mit 48 kg/h gefördert wird. Nach der Dispergierung durchläuft das Produkt einen Zwischenbehälter, aus dem es mit Hilfe des am Umlaufverdampfer gemäß Beispiel 1 anliegenden Vakuum von ca. 190 mbar in den Verdampfer gefördert wird. Die weitere Aufarbeitung, d.h. destillative Entfernung des Lösungsmittels erfolgt wie in Beispiel 1 beschreiben. Die aus dem Umlaufverdampfer als Destillat anfallenden Acetonmengen werden an den Prozeßanfang zurückgeführt. Der Wassergehalt der Acetonfraktionen liegt bei 10 %.

Man erhält eine stabile feinteilige Dispresion mit einem Feststoffgehalt von 40 Gew.-% und einem Gehalt an $SO_3$-Gruppen von 14,3 mÄqu/100 g Feststoff.

Beispiel 6

In einem Stachelmischer (Kammervolumen 1,5 l, Drehzahl 1800 U/min) wird eine Prepolymerlösung mit einem NCO-Gehalt von 1,75 Gew.-%, hergestellt aus Hexamethylendiisocyanat, dem Mischpolyester gemäß Beispiel 1 und N-Methyldiethanolamin, in einem NCO/OH-Äquivalentverhältnis von 1,9:1, wobei das Molverhältnis von Polyester zu N-Methyldiethanolamin bei 1:0,77 liegt, und gelöst in Aceton zu einer 35 %igen Lösung, mit einer 16,7 %igen wäßrigen Lösung von Isophorondiamin vermischt. Die Prepolymerlösung sowie die wäßrige Lösung des Kettenverlängerungsmittels werden mit Hilfe von Kolbenpumpen aus Vorratstanks gefördert, wobei die Prepolymerlösung eine Temperatur von 50°C aufweist und mit 90 kg/h gefördert wird und die Kettenverlängererlösung eine Temperatur von 21°C aufweist und mit 13,4 kg/h gefördert wird. Nach dem Stachelmischer durchläuft die Lösung ein spiralförmig gewundenes Rohr mit einem Volumen von 4,2 l und erreicht nach einer Gesamtverweilzeit von ca. 3,3 min einen zweiten Mischreaktor (Stachelmischer), in dem die kettenverlängerte Lösung mit N-Methyl-N-(methylaminocarbonyl)-aminomethansulfonsäure (als 50 %ige wäßrige Lösung) vermischt wird, welches eine Temperatur von 21°C aufweist und mit 2,06 kg/h gefördert wird. Nach der hierdurch bewirkten Neutralisation gelangt die kettenverlängerte und versalzte Lösung in einen dritten Mischreaktor (Supratonmaschine), in welcher sie mit Wasser vermischt wird, welches eine Temperatur von 21°C aufweist und mit 43 kg/h gefördert wird. Nach der Dispergierung durchläuft das Produkt einen Zwischenbehälter, aus dem es mit Hilfe des am Umlaufverdampfer anliegenden Vakuum von ca. 190 mbar in den in Beispiel 1 beschriebenen Umlaufverdampfer gefördert wird. Die weitere Aufarbeitung, d.h. destillative Entfernung des Acetons erfolgt wie in Beispiel 1 beschrieben.

Man erhält letztendlich eine stabile Dispersion mit einem Feststoffgehalt von 40 Gew.-% und einem Gehalt an kationischen Gruppen (=N=$^{\oplus}$) von 29,6 mÄqu/100 g Feststoff.

## Patentansprüche

1. Verfahren zur kontinuierlichen Herstellung von wäßrigen Polyurethandispersionen durch kontinuierliches Vermischen unter Zuhilfenahme von Dispergieraggregaten von Lösungen von

a1) Isocyanatgruppen-freien, in Wasser dispergierbaren Polyurethanen, deren Dispergierbarkeit in Wasser auf das Vorliegen von chemisch eingebauten (potentiellen) ionischen Gruppen und/oder von chemisch eingebauten, innerhalb von end- und/oder seitenständig angeordneten Polyetherketten vorliegenden Ethylenoxideinheiten und/oder von im Gemisch mit den Polyurethanen vorliegenden externen Emulgatoren zurückzuführen ist, oder von

a2) freie Isocyanatgruppen aufweisenden, in Wasser dispergierbaren Isocyanat-Prepolymeren, deren Dispergierbarkeit auf das Vorliegen von chemisch eingebauten (potentiellen) ionische Gruppen und/oder von chemisch eingebauten, innerhalb von end- und/oder seitenständigen Polyetherketten vorliegenden Ethylenoxideinheiten und/oder von mit den Prepolymeren im Gemisch vorliegenden, externen Emulgatoren zurückzuführen ist in

b) organischen Lösungsmitteln eines unter 100°C liegenden Siedepunkts oder in Gemischen derartiger Lösungsmittel mit bis zu 50 Gew.-%, bezogen auf das Gesamtgewicht der Komponente b), an Wasser mit

c) Wasser, welches gegebenenfalls ein mit den freien Isocyanatgruppen der Komponente a2) schneller als Wasser reagierendes Kettenverlängerungsmittel oder ein Neutralisationsmittel für potentielle ionische Gruppen gelöst enthält,

und anschließende kontinuierliche destillative Entfernung zumindest der Hauptmenge des Lösungsmittels b) aus der resultierenden wäßrigen Dispersion, dadurch gekennzeichnet, daß das Abdestillieren mittels eines Umlaufverdampfers erfolgt.

2. Verfahren gemäß Anspruch 1, dadurch gekennzeichnet, daß die Komponenten a1) bzw. a2) einen Gehalt an eingebauten Carboxylat- und/oder Sulfonatgruppen oder von eingebauten Ammoniumgruppen von 1 bis 200 Milliäquivalenten pro 100 g Feststoff und/oder einen Gehalt an innerhalb von end- und/oder seitenständig angeordneten Polyethrketten vorliegenden Ethylenoxideinheiten von 0 bis 25 Gew.-% aufweisen.

3. Verfahren nach Anspruch 1 und 2, dadurch gekennzeichnet, daß man das durch Abdestillieren zurückgewonnene, gegebenenfalls einen Wassergehalt von bis zu 50 Gew.-% aufweisende Lösungsmittel als Komponente b) wiederverwendet.

4. Verwendung der gemäß Anspruch 1 bis 3 erhaltenen wäßrigen Polyurethandispersionen als Beschichtungsmittel für beliebige Substrate oder als Klebstoff.

## Claims

1. Process for the continuous preparation of aqueous polyurethane dispersions by continuous mixing, with the aid of dispersing aggregates, of solutions of

a1) water-dispersible polyurethanes which are free of isocyanate groups and the water-dispersibility of which can be attributed to the presence of chemically incorporated (potential) ionic groups and/or

chemically incorporated ethylene oxide units which are present in terminal and/or pendant polyether chains and/or external emulsifiers present in a mixture with the polyurethanes, or of

a2) water-dispersible isocyanate prepolymers which have free isocyanate groups and the dispersibility of which can be attributed to the presence of chemically incorporated (potential) ionic groups and/or chemically incorporated ethylene oxide units which are present in terminal and/or pendant polyether chains and/or external emulsifiers present in a mixture with the prepolymers in

b) organic solvents having a boiling point below 100°C or in mixtures of these solvents with up to 50% by weight, relative to the total weight of component b), of water, with

c) water which, if appropriate, contains a chain-lengthening agent reacting with the free isocyanate groups of component a2) more rapidly than water or a neutralizing agent for potential ionic groups in dissolved form,

and subsequent continuous removal by distillation of at least a major amount of solvent b) from the resulting aqueous dispersion, characterized in that the removal by distillation is carried out by means of a forced-circulation evaporator.

2. Process according to Claim 1, characterized in that components a1) and a2) have an incorporated carboxylate and/or sulfonate or incorporated ammonium content of 1 to 200 milliequivalents per 100 g of solid and/or contain 0 to 25% by weight of ethylene oxide units present in terminal and/or pendant polyether chains.

3. Process according to Claim 1 and 2, characterized in that the solvent which is recovered by distillation and may have a water content of up to 50% by weight is reused as component b).

4. Use of the aqueous polyurethane dispersions obtained according to Claim 1 to 3 as coating material for any desired substrate or as adhesive.

**Revendications**

1. Procédé pour fabriquer en continu des dispersions aqueuses de polyuréthannes en mélangeant en continu à l'aide de groupes disperseurs des solutions de

a1) polyuréthannes exempts de groupes isocyanate, pouvant être dispersés dans l'eau, dont l'aptitude à la dispersion dans l'eau est due à la présence de groupes ioniques (potentiels) chimiquement incorporés et/ou d'unités oxyde d'éthylène chimiquement incorporées présentes dans des chaînes polyéther se trouvant en bout de chaîne ou en position latérale et/ou d'émulsifiants externes se trouvant en mélange avec les polyuréthannes ou de

a2) prépolymères d'isocyanate présentant des groupes isocyanate libres, pouvant être dispersés dans l'eau, dont l'aptitude à la dispersion dans l'eau est due à la présence de groupes ioniques (potentiels) chimiquement incorporés et/ou d'unités oxyde d'éthylène chimiquement incorporées présentes dans des chaînes polyéther se trouvant en bout de chaîne ou en position latérale et/ou d'émulsifiants externes se trouvant en mélange avec les prépolymères dans

b) des solvants organiques d'un point d'ébullition inférieur à 100°C ou dans des mélanges de tels solvants avec jusqu'à 50% en poids d'eau par rapport au poids total du composant b) avec

c) de l'eau contenant éventuellement à l'état dissous un agent d'allongement de chaîne réagissant plus vite que l'eau avec les groupes isocyanate libres du composant a2) ou un agent de neutralisation pour les groupes ioniques potentiels,

et en éliminant ensuite de manière continue par distillation au moins la majeure partie du solvant b) de la dispersion aqueuse résultante, caractérisé en ce que l'élimination par distillation se fait au moyen d'un évaporateur à circulation ou à rotation.

2. Procédé selon la revendication 1, caractérisé en ce que les composants a1) ou a2) présentent une teneur de 1 à 200 milliéquivalents par 100 g de substance solide en groupes carboxylate ou sulfonate incorporés ou en groupes ammonium incorporés et/ou une teneur de 0 à 25% en poids en unités oxyde d'éthylène présentes dans des chaînes polyéther se trouvant en bout de chaîne ou en position latérale.

3. Procédé selon la revendication 1 ou 2, caractérisé en ce que l'on réutilise comme composant b) le solvant récupéré par distillation, présentant éventuellement une teneur en eau pouvant atteindre jusqu'à 50% en poids.

4. Utilisation des dispersions aqueuses de polyuréthannes obtenues selon les revendications 1 à 3 comme produits de revêtements pour des substrats quelconques ou comme adhésifs.